Europäisches Patentamt

European Patent Office

Office européen des brevets

(19)

(11) Veröffentlichungsnummer: **0 445 164 B1**

(12) **EUROPÄISCHE PATENTSCHRIFT**

(45) Veröffentlichungstag der Patentschrift :
15.07.92 Patentblatt 92/29

(51) Int. Cl.$^5$: **B60K 17/22, B60G 9/02**

(21) Anmeldenummer : 89913000.9

(22) Anmeldetag : 15.11.89

(86) Internationale Anmeldenummer :
**PCT/EP89/01368**

(87) Internationale Veröffentlichungsnummer :
**WO 90/06242 14.06.90 Gazette 90/14**

(54) ANORDNUNG EINER LENKBAREN STARRACHSE AN EINEM FAHRGESTELL EINES ACKERSCHLEPPERS.

(30) Priorität : 25.11.88 DE 3839821

(43) Veröffentlichungstag der Anmeldung :
**11.09.91 Patentblatt 91/37**

(45) Bekanntmachung des Hinweises auf die
Patenterteilung :
**15.07.92 Patentblatt 92/29**

(84) Benannte Vertragsstaaten :
**DE FR GB IT SE**

(56) Entgegenhaltungen :
**DE-A- 3 834 693**

(56) Entgegenhaltungen :
**DE-C- 907 254**
**FR-A- 803 574**
**FR-A- 2 596 709**
**"Technisches Konzept Mercedes-Benz Allradschlepper MK 6703.3561.00-00/0287", 28.
Februar 1987, Daimler-Benz AG,Stuttgart-
Untertürkheim**

(73) Patentinhaber : **ZF FRIEDRICHSHAFEN
Aktiengesellschaft
Löwentaler Strasse 100 Postfach 2520
W-7990 Friedrichshafen 1 (DE)**

(72) Erfinder : **Haupt, Josef
Alpenblickstr. 48
W-7992 Tettnang (DE)**

EP 0 445 164 B1

Jouve, 18, rue Saint-Denis, 75001 PARIS

**Beschreibung**

Die Erfindung bezieht sich auf eine Anordnung einer lenkbaren Starrachse an einem Fahrgestell eines Ackerschleppers, wobei das Fahrgestell zumindest im Bereich seiner Baueinheiten Antriebsmotor, Schwungradgehäuse und Getriebe in Blockbauweise ausgebildet und gegenüber der Starrachse abgefedert ist, mit einem im Bereich der Quermittelebene der Starrachse an deren Rückseite angreifenden Schubrohr, das an seinem anderen Ende über eine Gelenkkugel in einem Widerlager des Fahrgestells frei drehbar geführt ist.

Eine Anordnung einer lenkbaren Starrachse an einem Ackerschlepper der vorgenannten Gattung ist Gegenstand der älteren Patentanmeldung P 38 34 693.1 (entspricht der DE-A-3834693, veröffentlicht 29.06.1989).

Die dem Antriebsmotor vorgelagerte Starrachse ist dabei mittig pendelnd in einem Querlenker aufgehängt, welcher gemeinsam mit einem Feder-Dämpfer-Element für eine Abfederung der Starrachse sorgt. Das an der Rückseite an der Starrachse angreifende Schubrohr ist in einer Variante zentral unter dem Antriebsmotor, der in Blockbauweise mit dem Schwungradgehäuse und dem Getriebe verbunden ist, hindurchgeführt. Bei einer derartigen Standardbauweise des Ackerschleppers unter Verwendung einer gefederten Starrachse mit Schubrohr ergeben sich Probleme hinsichtlich der Ausbildung der Ölwanne des Antriebsmotors, da das Schubrohr den Bauraum für die Ölwanne erheblich einschränkt. Bei einer weiteren Variante soll wegen dieser Problematik ein gabelförmig ausgebildeter Schublenker verwendet werden, dessen Schenkel seitlich der Ölwanne vorbeigeführt sind. Die neben der Ölwanne verlaufenden Schenkel des Schublenkers verringern dabei den Freiraum für einen maximalen Lenkanschlag des jeweils kurveninneren Rades.

Aus dem Prospekt "Technisches Konzept, Mercedes-Benz-Allradschlepper" MK 6703.3561.00-00/0287 ist ein Ackerschlepper in Rahmenbauweise bekannt, dessen an der Starrachse angreifendes Schubrohr außermittig angeordnet an der Ölwanne des Antriebsmotors vorbeigeführt ist und an einem Verteilergetriebegehäuse abgestützt ist. Ein derartiges Konzept eignet sich nicht für Ackerschlepper in Standardbauweise, bei denen die Baueinheiten in Blockbauweise miteinander verbunden sind.

Der Erfindung liegt die Aufgabe zugrunde, das Schubrohr der Starrachse derart anzuordnen, daß die Bodenfreiheit und der maximale Lenkeinschlag unbeeinträchtigt bleiben. Dabei soll die fahrgestellseitige Abstützung des Schubrohrs ohne wesentliche bauliche Veränderungen der Baueinheiten des Ackerschleppers ermöglicht werden.

Diese Aufgabe wird dadurch gelöst, daß das Schubrohr durch eine tunnelartige Ausnehmung einer Ölwanne des Antriebsmotors hindurchgeführt ist und daß das Widerlager an der Ölwanne im Bereich von deren Verschraubung mit dem Schwungradgehäuse vorgesehen und zumindest abschnittsweise einstückig mit der Ölwanne ausgebildet ist. Bei Verwendung einer Starrachse mit Schubrohr ist folglich nur die Ölwanne des Antriebsmotors baulich zu verändern. Da das Schubrohr innerhalb der tunnelartigen Ausnehmung angeordnet ist, bleibt einerseits die Bodenfreiheit des Fahrzeugs erhalten und andererseits beeinträchtigt das mittig verlaufende Schubrohr auch nicht die Lenkfähigkeit des Fahrzeugs. Sollen Ackerschlepper innerhalb einer Baureihe mit ungefederter oder gefederter Lenkachse ausgerüstet sein, so ist nach der Erfindung für die gefederte Version lediglich eine Variante der Ölwanne mit tunnelartiger Ausnehmung und Widerlager erforderlich. Die Ölwanne kann in dem Bereich, in dem sie mit dem Schwungradgehäuse verbunden ist, für die Aufnahme des Widerlagers des Schubrohrs ohne zusätzlichen Aufwand mit ausreichender Steifigkeit ausgebildet werden.

Weitere erfindungsgemäße Ausgestaltungen sind in den Unteransprüchen 2 bis 6 beschrieben. Gemäß Anspruch 2 soll das Widerlager eine mittige horizontale Teilungsebene aufweisen, wobei sein oberer Halbschalenträger einstückig mit der Ölwanne ausgebildet und mit einem unteren Halbschalenträger verschraubbar ist. In den beiden Halbschalenträgern ist die Gelenkkugel über Hälften einer Kugellagerschale geführt. Eine Montage bzw. Demontage des Kugelgelenks zu Reparaturzwecken ist somit auf einfache Weise möglich.

Dem Anspruch 3 zufolge sollen die Halbschalenträger gemeinsam mit der Ölwanne eine plane Anschlußfläche zum Anflanschen des Schwungradgehäuses aufweisen. Durch die Verbindung des unteren Halbschalenträgers sowohl mit dem oberen Halbschalenträger als auch dem Schwungradgehäuse ergibt sich insgesamt ein steifer Verband von Ölwanne und Schwungradgehäuse in diesem Bereich.

Weiterhin soll gemäß Anspruch 4 der untere Halbschalenträger einen radialen Schmierölkanal aufweisen, der mit dem Inneren der beiden sich seitlich des Schubrohrs erstreckenden Ölwannenabschnitte verbunden ist. Dieser Schmierölkanal sorgt für eine Verbindung des geteilten Ölsumpfes, so daß der Ölstand stets ausgeglichen ist und eine einzige Schmierölpumpe des Antriebsmotors über ein Saugrohr aus beiden Abschnitten der Ölwanne Schmieröl ansaugen kann.

Nach Anspruch 5 ist es aber auch möglich, auf einen derartigen Schmierölkanal zu verzichten und die Schmierölpumpe des Antriebsmotors mit zwei Saugrohren zu versehen, die jeweils getrennt voneinander im jeweiligen Ölsumpf der Ölwannenabschnitte, über Schwimmerventile gesteuert, ansaugen. Mittels der Schwimmerventile wird der Ansaugquerschnitt der Saugrohre derart gesteuert, daß eine Luftansaugung der

2

Schmierölpumpe bei Unterschreitung eines minimalen Schmierölstands in einem der Ölwannenabschnitte vermieden wird.

Schließlich soll gemäß Anspruch 6 bei einem Ackerschlepper, dessen Kardanwelle im Inneren des Schubrohres angeordnet ist, eine die Kardanwelle antreibende Ausgangswelle in einem einstückig mit dem Schwungradgehäuse ausgebildeten Lagerschild gelagert sein. Dieser mit dem Radius des Schwungradgehäuses dimensionierte Lagerschild weist dabei eine große Anschraubfläche für den unteren Halbschalenträger auf.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Zur weiteren Erläuterung wird auf die Zeichnung verwiesen, in der ein Ausführungsbeispiel vereinfacht dargestellt ist. Es zeigen:

Fig. 1 eine Seitenansicht eines Ackerschleppers, dessen in Blockbauweise aneinander gefügte Baueinheiten besonders hervorgehoben sind,

Fig. 2 einen Teillängsschnitt durch eine Anordnung eines Schubrohres in einem Wiederlager, das in einer Ölwanne eines Antriebsmotors ausgebildet ist,

Fig. 3 eine Seitenansicht der Anordnung der Fig. 2 im Bereich der Ölwanne und des Widerlagers,

Fig. 4 einen Schnitt gemäß Linie IV-IV durch die Ölwanne und das Schubrohr in Fig. 3 und

Fig. 5 eine Variante, bei der über zwei Saugrohre Schmieröl aus getrennten Ölwannenabschnitten angesaugt wird.

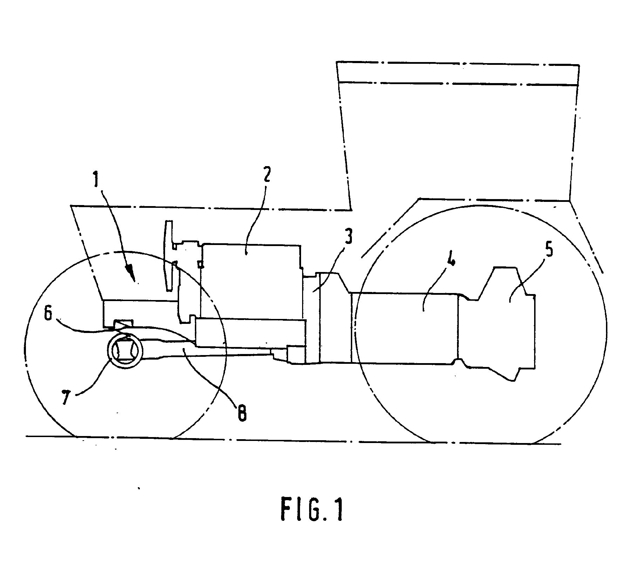

In der Fig. 1 ist ein Ackerschlepper dargestellt, dessen Baueinheiten Vorderachslagerbock 1, Antriebsmotor 2, Schwungradgehäuse 3, Getriebe 4 und Hinterachsgehäuse 5, in Blockbauweise aneinander befestigt sind. Der Vorderachslagerbock 1 nimmt dabei über eine Federung 6 eine Starrachse 7 auf, die an ihrer Rückseite mit einem Schubrohr 8 verbunden ist. Dieses Schubrohr 8 ist an seinem anderen Ende frei schwenkbar geführt in einem Widerlager 9, das an einer Ölwanne 10 des Antriebsmotors 2 angeordnet ist. Das Schubrohr 8 dient dabei zur Längskraftabstützung der Starrachse 7.

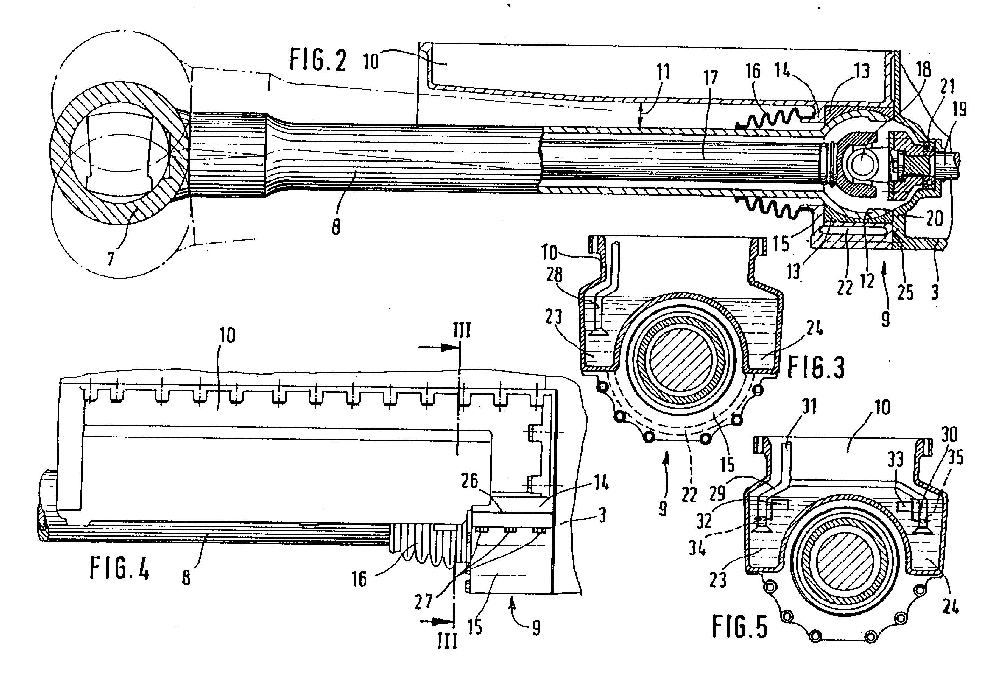

Aus den Fig. 2, 3 und 4 gehen der Verlauf und die Abstützung des Schubrohrs 8 im Widerlager 9 hervor. Das Schubrohr 8 ist durch eine tunnelartige Ausnehmung 11 der Ölwanne 10 geführt und weist an seinem Ende eine Gelenkkugel 12 auf. Diese Gelenkkugel 12 ist über obere und untere Kugel-Lagerschalen-Hälften 13 in einem oberen Halbschalenträger 14 und einem unteren Halbschalenträger 15 geführt, wobei der obere Halbschalenträger 14 einstückig mit der Ölwanne 10 ausgebildet und mit dem unteren Halbschalenträger 15 verschraubt ist. Über einen Faltenbalg 16 wird das Eindringen von Schmutz in das Innere des Widerlagers 9 verhindert. Im Inneren des Schubrohrs 8 ist eine Gelenkwelle 17 angeordnet, über welche die lenkbare Starrachse 7 antreibbar ist. Zu diesem Zweck steht die Gelenkwelle 17 über ein Antriebsgelenk 18 mit einer Ausgangswelle 19 in Verbindung, welche weiterhin durch das Schwungradgehäuse 3 hindurch bis in das in Fig. 1 dargestellte Getriebe 4 führt. Ein Lagerschild 20, der Bestandteil des Schwungradgehäuses 3 ist, nimmt dabei über ein Kugellager 21 die Ausgangswelle 19 auf. Der Halbschalenträger 15 weist einen radialen Schmierölkanal 22 auf, der mit dem Inneren von Ölwannenabschnitten 23 und 24, die durch die tunnelartige Ausnehmung 11 gebildet sind, miteinander verbindet (Fig. 3). Aus der Fig. 2 geht weiterhin hervor, daß die beiden Halbschalenträger 14 und 15 gemeinsam mit der Ölwanne 10 eine vertikale Anschlußfläche 25 zum Anflanschen des Schwungradgehäuses 3 bilden. Weiterhin geht aus Fig. 4 hervor, daß der untere Halbschalenträger 15 mit dem oberen Halbschalenträger 14 eine Teilungsebene 26 aufweist und an diesem über Schrauben 27 befestigt ist. Aus dem Ölwannenabschnitt 23 wird über ein Saugrohr 28 Schmieröl zur Schmierung des Antriebsmotors 2 von nicht dargestellter Ölpumpe angesaugt.

Bei der in den Fig. 2 bis 4 dargestellten Anordnung ist erfindungsgemäß der obere Halbschalenträger 14 gemeinsam mit der Ölwanne 10 als Gußteil hergestellt und bildet dabei einen Abschluß der tunnelartigen Ausnehmung 11. Die tunnelartige Ausnehmung 11 läßt die für eine maximale Einfederung der Starrachse 7 erforderlichen Schwenkbewegungen des Schubrohres 8 um seine Gelenkkugel 12 zu. Der untere Halbschalenträger 15 ist mit dem oberen Halbschalenträger 14 verschraubt, so daß das Schubrohr 8 demontierbar ist. Aufgrund der einteiligen Ausbildung des oberen Halbschalenträgers 14 mit der Ölwanne 10, die mit dem Schwungradgehäuse 3 verschraubt ist und der Verspannung des unteren Halbschalenträgers 15 mit dem oberen Halbschalenträger 14 und dem Schwungradgehäuse 3 ergibt sich eine besonders steife Ausbildung des Widerlagers 9. Der Schmierölkanal 22 ist unmittelbar in den unteren Halbschalenträger 15 integriert, so daß sich bei geringem Fertigungsaufwand ein Ausgleich des Schmierölstands in den beiden Ölwannenabschnitten 23 und 24 erzielen läßt. Die einteilige Bauweise des oberen Halbschalenträgers 14 mit der Ölwanne 10 ermöglicht erst durch ihren geringen Höhenbedarf die Unterbringung von Ausgleichswellen in der Ölwanne 10, die bei einem Antriebsmotor mit vier Zylindern notwendig sind. Fig. 5 zeigt einen im wesentlichen mit der Darstellung nach Fig. 4 übereinstimmenden Schnitt durch die Ölwanne 10 und das Schubrohr 8, wobei aber in jedem der beiden Ölwannenabschnitte ein Saugrohr 29 bzw. 30 angeordnet ist. Die beiden Saugrohre 29 und 30 münden in eine Ansaugleitung 31 einer nicht dargestellten Schmierölpumpe. Seitlich der Saugrohre 29 und 30 sind in der Ölwanne 10 Schwimmer 32 und 33 geführt, die aufgrund ihrer Vertikalbewegung Ventile 34 und 35 betätigen. Diese Ventile 34 und 35 verschließen, vom jeweiligen Schwimmer 32 bzw. 33 gesteuert, bei Unterschreitung des Ölstands in einem der Ölwannenabschnitte 23 bzw. 24 das jeweilige Saugrohr 29 bzw. 30, so daß die Schmierölpumpe keine Luft ansaugt.

Bezugszeichen

| 1 | Vorderachslagerbock |
|---|---|
| 2 | Antriebsmotor |
| 3 | Schwungradgehäuse |
| 4 | Getriebe |
| 5 | Hinterachsgehäuse |
| 6 | Federung |
| 7 | Starrachse |
| 8 | Schubrohr |
| 9 | Widerlager |
| 10 | Ölwanne |
| 11 | tunnelartige Ausnehmung |
| 12 | Gelenkkugel |
| 13 | Kugel-Lagerschalen-Hälften |
| 14 | oberer Halbschalenträger |
| 15 | unterer Halbschalenträger |
| 16 | Faltenbalg |
| 17 | Gelenkwelle |
| 18 | Antriebsgelenk |
| 19 | Ausgangswelle |
| 20 | Lagerschild |
| 21 | Kugellager |
| 22 | Schmierölkanal |
| 23 | Ölwannenabschnitt |
| 24 | Ölwannenabschnitt |
| 25 | Anschlußfläche |
| 26 | Teilungsebene |
| 27 | Schrauben |
| 28 | Saugrohr |
| 29 | Saugrohr |
| 30 | Saugrohr |
| 31 | Ansaugleitung |
| 32 | Schwimmer |
| 33 | Schwimmer |
| 34 | Ventil |
| 35 | Ventil |

**Patentansprüche**

1. Anordnung einer lenkbaren Starrachse (7) an einem Fahrgestell eines Ackerschleppers, wobei das Fahrgestell zumindest im Bereich seiner Baueinheiten Antriebsmotor (2), Schwungradgehäuse (3) und Getriebe (4) in Blockbauweise ausgebildet und gegenüber der Starrachse (7) abgefedert ist, mit einem im Bereich der Quermittelebene der Starrachse (7) an deren Rückseite angreifenden Schubrohr (8), das an seinem anderen Ende über eine Gelenkkugel (12) in einem Widerlager (9) des Fahrgestells frei drehbar geführt ist, dadurch **gekennzeichnet**, daß das Schubrohr (8) durch eine tunnelartige Ausnehmung (11) einer Ölwanne (10) des Antriebsmotors (2) hindurchgeführt ist und daß das Widerlager (9) an der Ölwanne (10) im Bereich von deren Verschraubung mit dem Schwungradgehäuse (3) vorgesehen und zumindest abschnittsweise einstückig mit dieser ausgebildet ist.

2. Anordnung einer lenkbaren Starrachse an einem Fahrgestell eines Ackerschleppers nach Anspruch 1, dadurch **gekennzeichnet**, daß das Widerlager (9) eine mittige horizontale Teilungsebene (26) aufweist, wobei sein oberer Halbschalenträger (14) einstückig mit der Ölwanne (10) ausgebildet und mit einem unteren Halbschalenträger (15) verschraubbar ist.

3. Anordnung einer lenkbaren Starrachse an einem Fahrgestell eines Ackerschleppers nach Anspruch 2, dadurch **gekennzeichnet**, daß die Halbschalenträger (14 und 15) gemeinsam mit der Ölwanne (10) eine plane Anschlußfläche (25) zum Anflanschen des Schwungradgehäuses (3) aufweisen.

4. Anordnung einer lenkbaren Starrachse an einem Fahrgestell eines Ackerschleppers nach Anspruch 2, dadurch **gekennzeichnet**, daß der untere Halbschalenträger (15) einen radialen Schmierölkanal (22) aufweist, der mit dem Inneren der beiden sich seitlich des Schubrohrs (8) erstreckenden Ölwannenabschnitte (23 und 24) verbunden ist.

5. Anordnung einer lenkbaren Starrachse an einem Fahrgestell eines Ackerschleppers nach Anspruch 1, dadurch **gekennzeichnet**, daß in dem Inneren der beiden sich seitlich des Schubrohrs (8) erstreckenden Ölwannenabschnitte (23 und 24) jeweils ein zur Ansaugung des Schmieröls dienendes Saugrohr (29 und 30) angeordnet ist, wobei die Saugrohre (29 und 30) über vom Schmierölstand im jeweiligen Ölwannenabschnitt (23, 24) gesteuerte Schwimmerventile (32, 33, 34, 35) absperrbar sind.

6. Anordnung einer lenkbaren Starrachse an einem Fahrgestell eines Ackerschleppers mit einer innerhalb des Schubrohres (8) angeordneten Gelenkwelle (17) nach Anspruch 1, dadurch **gekennzeichnet**, daß eine die Gelenkwelle (17) antreibende Ausgangswelle (19) in einem einstückig mit dem Schwungradgehäuse (3) ausgebildeten Lagerschild (20) gelagert ist.

## Claims

1. Arrangement of a steerable rigid axle (7) on a chassis of an agricultural tractor, with the chassis being of a block-type construction at least in the region of its constructional units, drive motor (2), flywheel housing (3) and gearing (4), and being spring-suspended relative to the rigid axle (7), having a push rod (8) which acts in the region of the transverse centre plane of the rigid axle (7) upon the rear of said axle and which, at its other end, is guided via a ball joint (12) in a freely rotatable manner in an abutment (9) of the chassis, **characterized** in that the push rod (8) is conveyed through a tunnel-like recess (11) in an oil sump (10) of the drive motor (2), and that the abutment (9) on the oil sump (10) is provided in the region of the latter's screw connection to the flywheel housing (3) and is at least in sections constructed as an integral part thereof.

2. Arrangement of a steerable rigid axle on a chassis of an agricultural tractor according to claim 1, **characterized** in that the abutment (9) has a central horizontal jointing plane (26), with the upper half-shell carrier (14) of said abutment forming an integral part of the oil sump (10) and being screw-connectable to a lower half-shell carrier (15).

3. Arrangement of a steerable rigid axle on a chassis of an agricultural tractor according to claim 2, **characterized** in that the half-shell carriers (14 and 15) jointly with the oil sump (10) have a plane flange facing (25) for flange-mounting of the flywheel housing (3).

4. Arrangement of a steerable rigid axle on a chassis of an agricultural tractor according to claim 2, **characterized** in that the lower half-shell carrier (15) has a radial lubricating oil channel (22) which is connected to the interior of the two oil sump portions (23 and 24) extending laterally of the push rod (8).

5. Arrangement of a steerable rigid axle on a chassis of an agricultural tractor according to claim 1, **characterized** in that there is disposed inside each of the two oil sump portions (23 and 24) extending laterally of the push rod (8) an induction manifold (29 or 30) used to draw in the lubricating oil, the induction manifolds (29 and 30) being blockable by means of float valves (32, 33, 34, 35) controlled by the level of lubricating oil in each oil sump portion (23, 24).

6. Arrangement of a steerable rigid axle on a chassis of an agricultural tractor having an articulated shaft (17) disposed inside the push rod (8) according to claim 1, **characterized** in that a primary shaft (19) driving the articulated shaft (17) is supported in a bearing bracket (20) forming an integral part of the flywheel housing (3).

## Revendications

1. Agencement d'un essieu rigide directeur (7) sur le châssis d'un tracteur agricole, dans lequel le châssis a une construction modulaire au moins dans la zone de ses unités correspondant à un moteur de traction (2), à un carter de volant (3) et à une boîte de vitesses (4) et est suspendu par rapport à l'essieu rigide (7), l'agencement comportant un tube de poussée (8) disposé dans la zone du plan transversal médian de l'essieu rigide (7) et raccordé à la face arrière de celui-ci, l'autre extrémité dudit tube étant montée de manière librement rotative par un joint à rotule (12) dans un palier de butée (9) du châssis, **caractérisé** en ce que le tube de poussée (8) traverse un évidement en forme de tunnel (11) d'un carter d'huile (10) du moteur de traction (2), et en ce que le palier de butée (9) est prévu sur le carter d'huile (10), dans la zone où celui-ci est boulonné au carter de volant (3), et comporte au moins une section qui est d'une pièce avec le carter d'huile.

2. Agencement selon la revendication 1, **caractérisé** en ce que le palier de butée (9) comporte un plan médian horizontal de séparation (26) et une moitié supérieure de porte-coussinets (14) qui est d'une pièce avec le carter d'huile (10) et qui peut être boulonnée à une moitié inférieure de porte-coussinets (15).

3. Agencement selon la revendication 2, **caractérisé** en ce que les moitiés de porte-coussinets (14 et 15) et le carter d'huile (10) présentent ensemble une surface plane d'appui (25) appliquée contre le carter de volant (3).

4. Agencement selon la revendication 2, **caractérisé** en ce que la moitié inférieure de porte-coussinets (15) comporte un canal radial de lubrification (22) qui est raccordé à l'intérieur des deux sections (23 et 24) du carter d'huile s'étendant d'un côté et de l'autre du tube de poussée (8).

5. Agencement selon la revendication 1, **caractérisé** en ce qu'il comporte, à l'intérieur de chacune des deux sections (23 et 24) du carter d'huile s'étendant d'un côté et de l'autre du tube de poussée (8), un tuyau d'aspiration (29, 30) servant à aspirer le lubrifiant, lesdits tuyaux d'aspiration (29 et 30) pouvant être bloqués au moyen de soupapes à flotteurs (32, 33, 34, 35) commandées par le niveau de lubrifiant dans les sections respectives (23, 24) du carter d'huile.

6. Agencement selon la revendication 1, comportant un arbre articulé (17) disposé à l'intérieur du tube de poussée (8), **caractérisé** en ce qu'un arbre de sortie (19) entraînant l'arbre articulé (17) est monté dans un corps de palier (20) fait d'une pièce avec le carter de volant (3).

FIG.1

FIG.2

FIG.3

FIG.5

FIG.4